# EUROPEAN PATENT SPECIFICATION

(11) **EP 1 334 022 B1**
(45) Date of publication and mention of the grant of the patent: **22.09.2004**
(21) Application number: 01979180.5
(22) Date of filing: 26.10.2001
(51) Int. Cl.: B62D 33/037, B62D 33/02

(54) **A LOCKING DEVICE AT LOADING FLAPS FOR VEHICLES OR THE LIKE**
VERRIEGELUNGSVORRICHTUNG AN LADEKLAPPEN FÜR FAHRZEUGE ODER DERGLEICHEN
DISPOSITIF DE BLOCAGE DE CLAPETS DE VEHICULES OU AUTRES ARTICLES SEMBLABLES

(30) Priority: 26.10.2000 SE 0003901; 26.10.2000 SE 0003902
(43) Date of publication of application: 13.08.2003
(73) Proprietor: Rosen, Göran, 640 50 Björnlunda (SE)
(72) Inventor: Rosen, Göran, 640 50 Björnlunda (SE)
(74) Representative: Hammond, Andrew
(86) International application number: PCT/SE2001/002355
(87) International publication number: WO 2002/036415

(56) References cited:
- EP-A1- 0 556 169
- AT-B- 325 430
- DE-A1- 4 108 078
- DE-A1- 10 122 098
- DE-C1- 3 817 220
- SE-B- 466 492

## Description

### TECHNICAL FIELD

The present invention relates to a locking device at loading flaps for vehicles or the like.

### THE BACKGROUND OF THE INVENTION AND THE UNDERLYING PROBLEM

Already known locking devices at loading flaps for vehicles or the like have levers for manoeuvring locking components. In some cases the levers stop in positions which are not desired, for example straight outwards from the loading flap or obliquely outwards. This means that the levers may hook on passing persons and cause personal injuries. Furthermore, in these positions, when the vehicle is moved, the levers may hit persons or objects and cause serious injuries. Furthermore, the locking devices already known are difficult to manage, require a great force in manoeuvring and a big space in the flap. In document DE-A-41 08 078 such a locking device according to prior art is disclosed. This device has the features corresponding to the features of the preamble of claim 1 herein.

### THE OBJECT OF THE INVENTION AND THE SOLUTION OF THE PROBLEM

The object of the invention is to solve some of the above mentioned problems. This is obtained by a device according to the claim 1.

The dependent claims describe further preferred embodiments of the invention.

### DESCRIPTION OF THE DRAWINGS

With reference to the appended drawings, the invention will be described more closely in examples of embodiment.
Fig. 1 shows schematically a lateral view of a locking device according to the invention having an inserted lever.

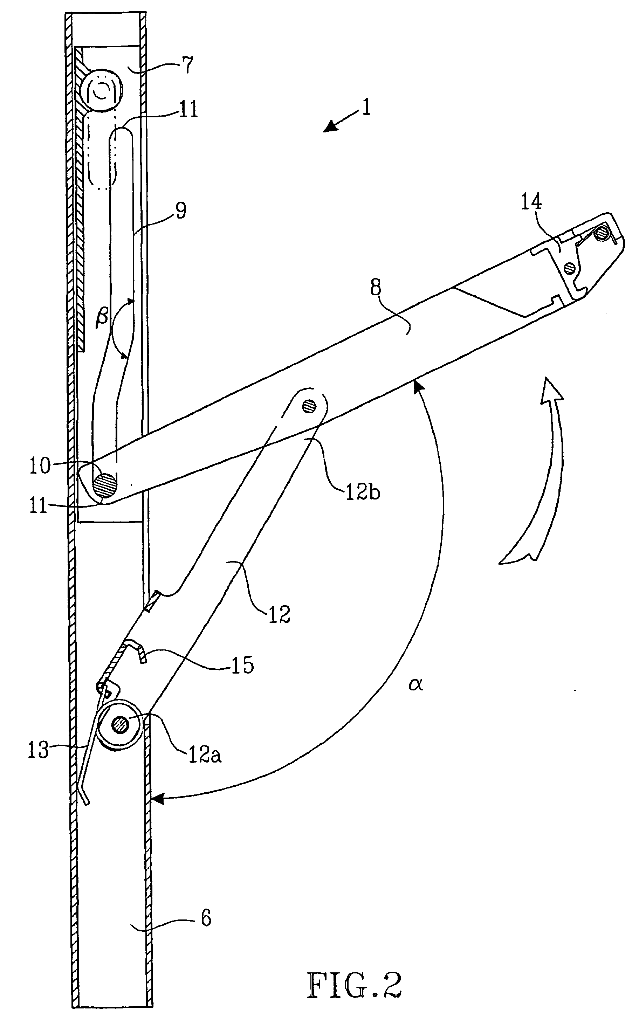

Fig. 2 shows schematically a lateral view of the locking device according to the invention having the lever pulled out.
Fig. 3 shows schematically a lateral view of the locking device according to the invention having the lever in a raised position.
Fig. 4 shows schematically a front view of the locking device according to the invention having the lever inserted.

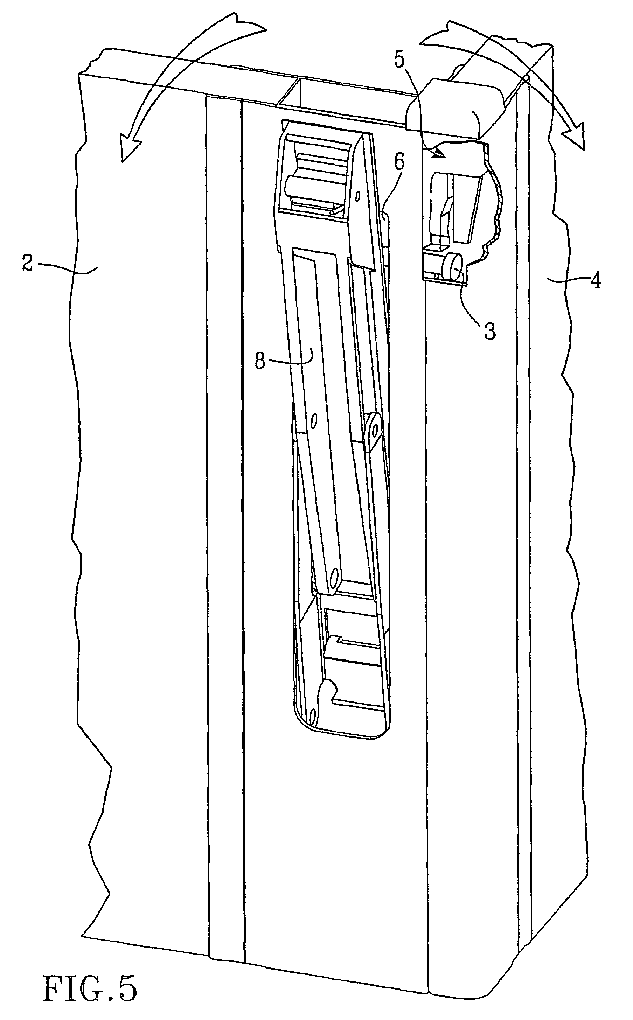

Fig. 5 shows schematically a perspective view of the locking device according to the invention.

### DESCRIPTION OF EXAMPLES OF EMBODIMENTS

A locking device 1 at a vehicle or the like for locking loading flaps 2 has a locking component 3. At a vehicle part 4, for example a post or another flap, adjacent to the first flap, there is a lock fitting 5, with which the locking component 3 co-operates and thereby the flap 2 and the vehicle part 4 are held together. The flap has a groove 6, in which an elongated slide 7 is displaceable. A lever 8 is displaceably connected in a first end thereof with the slide and arranged to push the slide and thereby also the locking component, when being effected, so that the locking device is opened or closed. The slide 7 has two guide channels 9 arranged at the sides of the slide and thereby also at the sides of the groove. The lever 8 has two guide members 10 in the first end thereof, which are arranged to be pushed in their respective guide channel 9. The guide channels 9 are delimited at the ends thereof by a respective stop 11. Furthermore, the guide channels 9 are shorter than the movement path of the guide members 10, and consequently the whole slide 7 may be displaced by means of the lever 8 when the guide members 10 are in contact to one of the stops 11. Thus, in this position a movement of the lever is transferred to the locking component 3 via the slide 7 and thereby the locking device may be opened or locked.

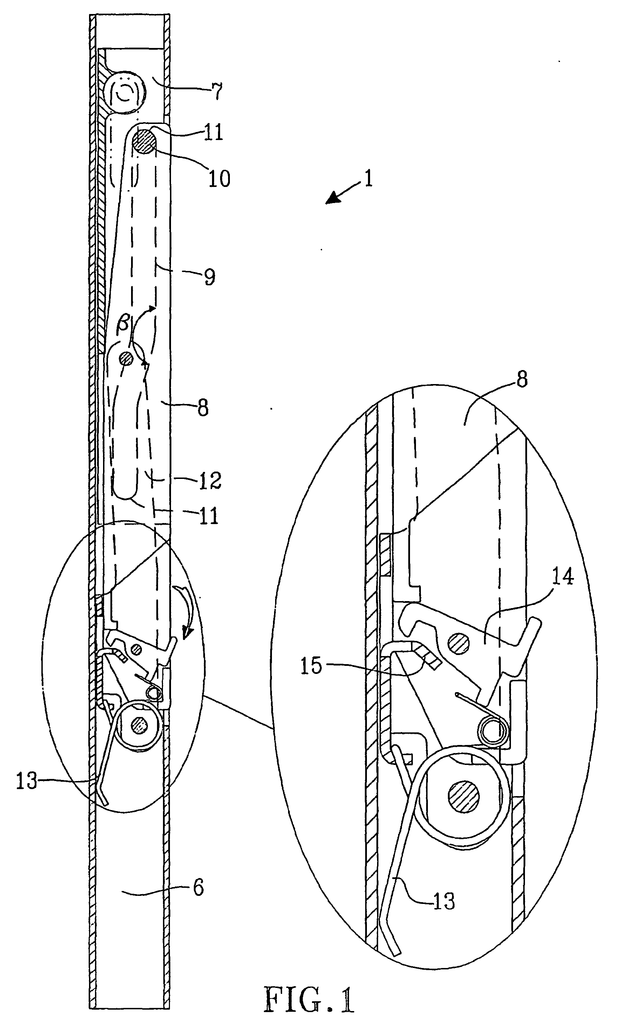

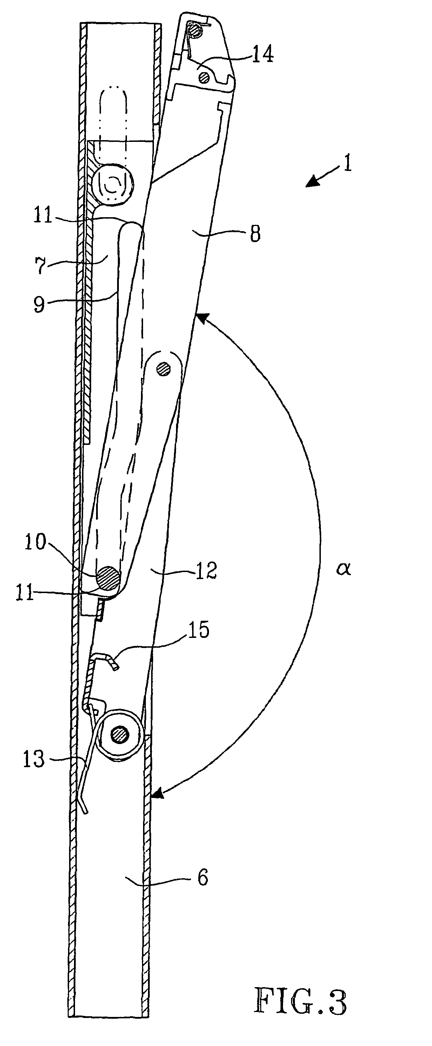

An arm 12 is pivotally mounted in the first end 12b thereof at the lever 8 and in the other end 12a thereof it is pivotally mounted at the flap 2 at the lower part of the groove 6. However, in another embodiment said end 12a may be journalled in another position at the flap 2. A spring 13 is arranged at the arm 12 and arranged to hold the lever 8 in the respective end position thereof, see fig. 1 and 3. Thus, the spring 13 acts to move the lever 8 toward the lowered position thereof when the lever is pulled out less than an angle α=90° and in the case the lever is pulled out more than an angle α=90° the spring 13 acts to move the lever 8 toward the raised position thereof.

In the 90 degrees-position of the lever, the force exerted by the arm and acting upon the lever is directed perpendicularly to the guide channels and also a small friction force between the guide channels and the guide members could cause the lever to stay in the 90 degrees-position thereof. To prevent this the guide channels and the guide members have low friction. Furthermore, the guide channels 9 are somewhat angled according to an angle β which is arranged so that during a movement of the lever the guide members 10 pass the apex of the angle β substantially in the 90 degrees-position of the lever. The apex of the angle β is obtuse and is directed outwards toward the lever 8. This means that during a movement of the lever the manoeuvring force increases momentarily when the guide members 10 are in positions before the angle β and decreases when the guide members 10 are in positions after the angle β, independent of the movement direction of the lever. Thus, this increase of the force and decrease of the force, respectively, co-operate with the spring 13 and thereby the movement of the lever 8 toward respective end position is facilitated.

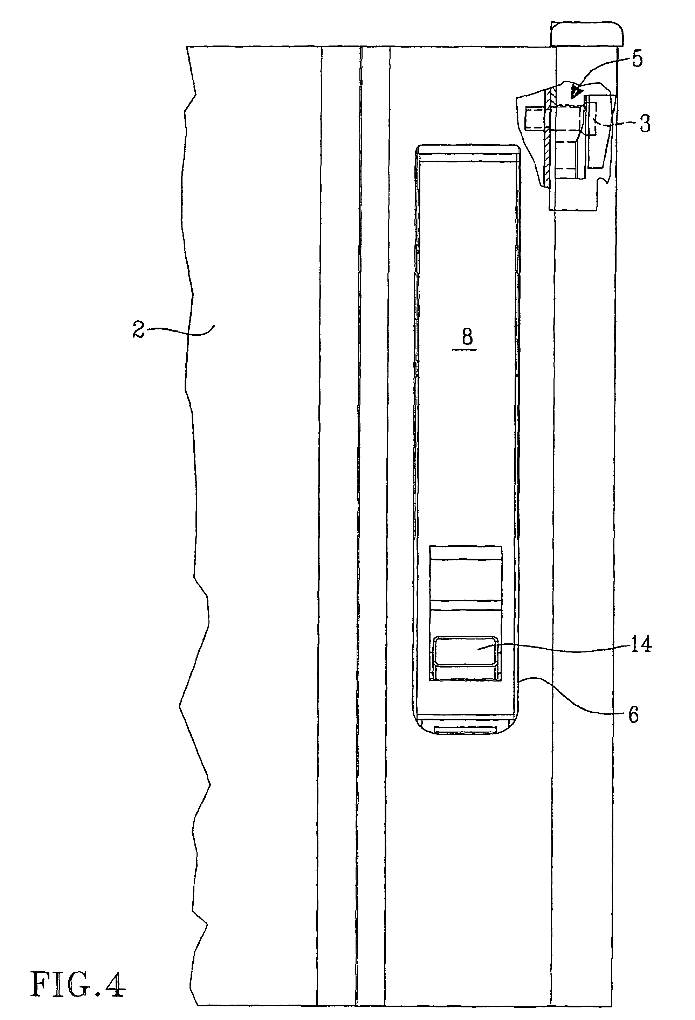

The lever 8 is arranged to be pivoted substantially 180° about the first end 12b of the arm, which end in such a pivoting describes a movement from the groove 6, out a portion from the groove and thereafter back to the groove 6. In the lowered position according to fig. 1 the lever 8 placed in the groove 6 and in the raised position the lever 8 is in, or substantially in the groove 6, see fig. 3 or 4. The combination of the slide 7 and the arm 12, in the first end 12b thereof the lever 8 is pivotally mounted, thus results in the advantage that the lever 8 may be in substantially the same position in the raised position as in the lowered position relative to the longitudinal direction of the groove 6. This have advantages, inter alia because in this way it may be avoided that the lever 8 in the raised position requires space above the groove 6 and possibly stick out above the upper edge of the flap 2. Accordingly, the device enables that the length of the lever 8 may be maximized, which is favourable when the lever is to be manoeuvred. In an alternative embodiment the arm 12 is pivotally mounted in the middle of the lever 8 and in this case the lever 8 may be totally pivoted 180° and in the both end positions thereof lay completely in the groove 6.

Thus, in a locked position the lever 8 is lowered and the locking component 3 and the slide 7 are in the uppermost positions thereof. In an open position, when the lever 8 is raised, the locking component 3 and the slide 7 are in the lowest positions thereof.

Since the lever 8 effects only the position of the slide 7, and thereby the position of the locking component 3, during a part of the pivoting phase of substantially 180° of the lever 8, and since the lever 8 and the arm 12 work as a gear mechanism so that a force which acts on the lever 8 is increased when it is transferred to the locking component 3, the locking device 1 will be easy to manoeuvre. The guide channels 9 also result in that a movement of the lever 8 from any of the end positions thereof is facilitated since the slide 7 is not connected until the lever 8 is pulled out. This means that during the main part of the movement of the lever 8 between the both end positions thereof the movement of the lever may be performed by using a relatively small force as a result of low friction, since the lever is manoeuverable without any considerable effect from the slide 7 and/or the locking component 3. In this case also the advantage that the spring 13 may be dimensioned for a relatively low friction resistance may be obtained.

At the other end of the lever 8 there is a snap lock 14, which together with the spring 13 is arranged to hold the lever 8 on one side of a locking shoulder 15. Thus, if the lever 8 lays in the groove 6 the snap lock 14 has to be opened to enable the lever 8 to be moved outwards and to pass the locking shoulder 15 and if the lever 8 is pulled out also in this case the snap lock 14 has to be opened to enable the lever 8 to be moved back to the groove 6.

The invention is not to be apprehended as delimited by the examples described above, but may be modified within the scope of the claims, and for example the angled part of the guide channel 9 may be firmly connected with the groove 6 so that the position of the guide member 10 at the obtuse apex of the angle coincidents with the straight pulled out position of the lever 8, i.e. α=90° independent of the position of the slide 7.

### COMPILATION OF REFERENCE NUMERALS

- 1: locking device
- 2: flap
- 3: locking component
- 4: vehicle part
- 5: lock fitting
- 6: groove
- 7: slide
- 8: lever
- 9: guide channels
- 10: guide members
- 11: stops
- 12: arm
- 13: spring
- 14: snap lock
- 15: locking shoulder
- α: lever angle
- β: guide channel angle

## Claims

1. A locking device (1) at loading flaps (2) for vehicles or the like, comprising a locking component (3) at a flap (2) which locking component is arranged to co-operate with a lock fitting (5) at a vehicle part (4) adjacent to the flap (2), and which locking component (3) is attached to an elongated slide (7), which is displaceable in a groove (6) in the flap (2) by means of a lever (8), the slide (7) having at least one guide channel (9), along which a guide member (10) arranged at a first end of the lever (8) is arranged to be pushed, said guide channel (9) being delimited at each end thereof by a stop (11), the lever (8) being pivotally mounted in a first end (12b) of an arm (12), the opposite end of which is pivotally mounted at the groove (6) or at the flap (2), and at which arm (12) a spring (13) is arranged to hold the lever (8) in the lowered and raised end position, respectively, **characterized in that** said stops (11) are arranged to transfer a pushing movement to the slide (7), and thereby to the locking component (3), in a direction coincident with a prolongation of the guide channel (9) when being in contact with the guide member, and that the end positions of the slide correspond to a lowered and a raised position, respectively, of the lever (8).

2. A locking device according to claim 1, **characterized in that** the slide (7) has two parallel guide channels (9).

3. A locking device according to any preceding claim, **characterized in that** at least one arm (12) has a first part pivotally attached at the groove and a second part pivotally attached at the lever (8), which together constitute a double-armed lever.

4. A locking device according to any preceding claim, **characterized in that** the guide channel (9) has an angle (β) with the apex directed toward the lever (8).

5. A locking device according to any preceding claim, **characterized in that** the total distance of movement of the guide member (10) is substantially equal to the sum of the length of the guide channel (9) and the pushing distance for the slide (7).

6. A locking device according to any preceding claim, **characterized in that** the spring (13) is arranged between the flap (2) and the arm (12).

7. A locking device according to any preceding claim, **characterized in that** the lever (8) is arranged to be pivoted by the spring (13) toward the lowered position when being in a position less than 90° (α).

8. A locking device according to any preceding claim, **characterized in that** the lever (8) is arranged to be pivoted by the spring (13) toward the raised position when being in a position greater than 90° (α).

9. A locking device according to any preceding claim, **characterized in that** the arm (12) has two parallel parts, which are pivotally mounted on each side of the lever (8).

10. A locking device according to any preceding claim, **characterized in that** the lever (8) in the other end thereof has a snap lock (14), which is arranged to fix the lever (8) in the groove (6).

11. A locking device according to any preceding claim, **characterized in that** the lever (8) is maneuverable between said lowered position and said raised position by means of a pivoting motion of substantially 180°.

## Patentansprüche

1. Verriegelungsvorrichtung (1) an Ladeklappen (2) für Fahrzeuge oder dergleichen, welche ein Verriegelungsteil (3) an einer Klappe (2) aufweist, welches in der Weise angeordnet ist, dass es mit einem Verriegelungsbeschlag (5) an einem der Klappe (2) benachbarten Fahrzeugteil (4) zusammenwirkt, und welches an einem lang gestreckten Schieber (7) angebracht ist, der in einer Nut (6) in der Klappe (2) mit Hilfe eines Hebels (8) verschieblich ist, wobei der Schieber (7) mindestens einen Führungskanal (9) aufweist, entlang welchem ein Führungsteil (10), das an einem ersten Ende des Hebels angebracht ist, so angeordnet ist, dass es geschoben werden kann, wobei der Führungskanal (9) an jedem seiner Enden durch einen Anschlag (11) begrenzt ist, wobei der Hebel (8) verschwenkbar in einem ersten Ende (12b) eines Arms (12) angebracht ist, während sein gegenüber liegendes Ende an der Nut (6) oder der Klappe (2) verschwenkbar angebracht ist, wobei an dem Arm (12) eine Feder (13) so angeordnet ist, dass sie den Hebel (8) in der abgesenkten bzw. angehobenen Endstellung hält, **dadurch gekennzeichnet, dass** die Anschläge (11) so angeordnet sind, dass sie auf den Schieber (7) und dadurch auf das Verriegelungsteil (3) eine Schiebebewegung in einer Richtung übertragen, die mit einer Verlängerung des Führungskanals (9) zusammenfällt, wenn sie in Berührung mit dem Führungsteil stehen, und dass die Endstellungen des Schiebers jeweils einer abgesenkten bzw. einer angehobenen Position des Hebels (8) entsprechen.

2. Verriegelungsvorrichtung nach Anspruch 1, ***dadurch gekennzeichnet*, dass** der Schieber (7) zwei parallele Führungskanäle (9) besitzt.

3. Verriegelungsvorrichtung nach einem der vorhergehenden Ansprüche, **dadurch gekennzeichnet, dass** mindestens ein Arm (12) ein erstes, verschwenkbar an der Nut angebrachtes Teil und ein verschwenkbar am Hebel (8) angebrachtes Teil aufweist, wobei die Teile zusammen einen zweiarmigen Hebel bilden.

4. Verriegelungsvorrichtung nach einem der vorhergehenden Ansprüche, **dadurch gekennzeichnet, dass** der Führungskanal (9) einen Winkel (β) aufweist, dessen Spitze zum Hebel (8) hin gerichtet ist.

5. Verriegelungsvorrichtung nach einem der vorhergehenden Ansprüche, **dadurch gekennzeichnet, dass** die gesamte Distanz der Bewegung des Führungsteils (10) im Wesentlichen gleich der Summe aus der Länge des Führungskanals (9) und aus der Schiebedistanz für den Schieber (7) ist.

6. Verriegelungsvorrichtung nach einem der vorhergehenden Ansprüche, **dadurch gekennzeichnet, dass** die Feder (13) zwischen der Klappe (2) und dem Arm (12) angeordnet ist.

7. Verriegelungsvorrichtung nach einem der vorhergehenden Ansprüche, **dadurch gekennzeichnet, dass** der Hebel (8) so angeordnet ist, dass er mittels der Feder (13) zur abgesenkten Position hin verschwenkbar ist, wenn er sich in einer Position unter einem Winkel von weniger als 90° (α) befindet.

8. Verriegelungsvorrichtung nach einem der vorhergehenden Ansprüche, **dadurch gekennzeichnet, dass** der Hebel (8) so angeordnet ist, dass er mittels der Feder (13) zur angehobenen Position hin verschwenkbar ist, wenn er sich in einer Position unter einem Winkel von mehr als 90° (α) befindet.

9. Verriegelungsvorrichtung nach einem der vorhergehenden Ansprüche, **dadurch gekennzeichnet, dass** der Arm (12) zwei parallele Tele aufweist, die verschwenkbar auf jeder Seite des Hebels (8) angebracht sind.

10. Verriegelungsvorrichtung nach einem der vorhergehenden Ansprüche, **dadurch gekennzeichnet, dass** der Hebel (8) an seinem anderen Ende eine Rastverriegelung (14) aufweist, welche so angeordnet ist, dass sie den Hebel (8) in der Nut (6) fixiert.

11. Verriegelungsvorrichtung nach einem der vorhergehenden Ansprüche, **dadurch gekennzeichnet, dass** der Hebel (8) zwischen der abgesenkten Position und der angehobenen Position mittels einer Schwenkbewegung von im Wesentlichen 180° betätigbar ist.

## Revendications

1. Dispositif de verrouillage (1) d'un volet de chargement (2) pour véhicules ou analogue, comprenant un organe de verrouillage (3) du volet (2), lequel organe de verrouillage est disposé pour coopérer avec une ferrure de verrouillage (5) située sur une partie (4) du véhicule adjacente au volet (2), et lequel organe de verrouillage (3) est lié à une coulisse (7) longitudinale, qui est mobile dans une rainure (6) ménagée dans le volet (2) au moyen d'un levier (8), la coulisse (7) ayant au moins une rainure-guide (9), le long de laquelle un élément-guide (10) disposé à une première extrémité du levier (8) est apte à être poussé, ladite rainure-guide (9) étant délimitée à chacune de ses extrémités par un arrêt (11), le levier (8) étant monté de manière pivotante à une première extrémité (12b) d'un bras (12), l'extrémité opposée de ce dernier étant montée de manière pivotante dans la rainure (6) ou dans le volet (2), et ledit bras (12) est doté d'un ressort (13) pour tenir le levier (8) respectivement dans les positions extrêmes baissée et levée, ***caractérisé en ce que*** lesdits arrêts (11) sont disposés pour transférer un mouvement de poussée à la coulisse (7), et de ce fait à l'organe de verrouillage (3), dans une direction coïncidant avec un prolongement de la rainure-guide (9) lorsqu'ils sont en contact avec l'élément guide, et que les positions d'extrémité de la coulisse correspondent respectivement à une position baissée et une position levée du levier (8).

2. Dispositif de verrouillage selon la revendication 1, ***caractérisé en ce que*** la coulisse (7) possède deux rainures-guides (9).

3. Dispositif de verrouillage selon la revendication 1 ou 2, ***caractérisé en ce qu***'au moins un bras (12) possède une première partie liée de manière pivotante à la rainure et une seconde partie liée de manière pivotante au levier (8), qui constituent ensemble un levier inter-appui.

4. Dispositif de verrouillage selon l'une quelconque des revendications précédentes, ***caractérisé en ce que*** la rainure-guide (9) possède un angle (β) avec l'extrémité dirigée vers le levier (8).

5. Dispositif de verrouillage selon l'une quelconque des revendications précédentes, ***caractérisé en ce que*** la distance totale de mouvement de l'élément-guide (10) est substantiellement égale à la somme de la longueur de la rainure-guide (9) et de la distance de poussée pour la coulisse (7).

6. Dispositif de verrouillage selon l'une quelconque des revendications précédentes, ***caractérisé en ce que*** le ressort (13) est disposé entre le volet (2) et le bras (12).

7. Dispositif de verrouillage selon l'une quelconque des revendications précédentes, ***caractérisé en ce que*** le levier (8) est agencé pour être entraîné en rotation par le ressort (13) vers la position baissée quand il est dans une position inférieure à 90° (α).

8. Dispositif de verrouillage selon l'une quelconque des revendications précédentes, ***caractérisé en ce que*** le levier (8) est agencé pour être entraîné en rotation par le ressort (13) vers la position levée quand il est dans une position supérieure à 90° (α).

9. Dispositif de verrouillage selon l'une quelconque des revendications précédentes, ***caractérisé en ce que*** le bras (12) possède deux parties parallèles, qui sont montées de manière pivotante sur chaque côté du levier (8).

10. Dispositif de verrouillage selon l'une quelconque des revendications précédentes, ***caractérisé en ce que*** le levier (8) possède à son autre extrémité une fermeture encliquetable (14), qui est agencée pour bloquer le levier (8) dans la rainure (6).

11. Dispositif de verrouillage selon l'une quelconque des revendications précédentes, ***caractérisé en ce que*** le levier (8) est manoeuvrable entre ladite position baissée et ladite position levée au moyen d'un mouvement pivotant de substantiellement 180°.
